# FASCICULE DE BREVET EUROPEEN

(11) **EP 0 670 014 B1**
(45) Date de publication et mention de la délivrance du brevet: **15.10.1997**
(21) Numéro de dépôt: 93924654.2
(22) Date de dépôt: 29.10.1993
(51) Int. Cl.: F16D 55/226, F16D 65/097

(54) **ENSEMBLE D'UN ORGANE DE FRICTION ET D'UN RESSORT POUR FREIN A DISQUE, ET FREIN A DISQUE EQUIPE D'UN TEL ENSEMBLE**
AUS REIBELEMENT UND FEDER BESTEHENDE ANORDNUNG FÜR EINE SCHEIBENBREMSE SOWIE MIT DIESER ANORDNUNG VERSEHENE SCHEIBENBREMSE
ASSEMBLY CONSISTING OF A FRICTION MEMBER AND A SPRING FOR DISK BRAKES AND DISK BRAKE FITTED WITH SAME

(30) Priorité: 26.11.1992 FR 9214208
(43) Date de publication de la demande: 06.09.1995
(73) Titulaire: Bosch Systemes de Freinage, 93700 Drancy (FR)
(72) Inventeur: LE DEIT, Gérard, F-77181 Courtry (FR); GERARD, Jean-Louis, F-93170 Bagnolet (FR)
(74) Mandataire: Bentz, Jean-Paul
(86) Numéro de dépôt international: FR9301067
(87) Numéro de publication internationale: WO9412803

(56) Documents cités:
- EP-B- 0 002 399
- DE-A- 2 345 732
- DE-B- 2 505 879
- DE-U- 1 966 979
- FR-A- 2 046 600

## Description

La présente invention concerne le domaine des freins à disque pour véhicules automobiles, et a plus particulièrement pour objet un ensemble constitué d'un organe de friction et d'un ressort pour équiper de tels freins à disque.

Les freins à disque sont connus depuis longtemps et comportent classiquement des organes de friction reçus par leurs extrémités circonférentielles en ancrage et en coulissement sur un organe supportant le couple de freinage, que celui-ci soit constitué par un étrier fixe, par un étrier coulissant ou encore par un organe support fixe, des moyens de commande étant associés pour solliciter l'organe de friction en contact de freinage avec une face correspondante du disque de frein.

Il est également connu, par exemple du document FR-A-2 330 916, de donner aux extrémités circonférentielles des organes de friction une surface arrondie susceptible de coopérer en ancrage et coulissement avec une surface arrondie correspondante définie sur l'organe support de couple, l'une de ces surfaces arrondies étant concave et l'autre surface arrondie étant convexe.

Pour un frein de ce type, il est prévu par le document EP-B-0 002 399, un organe de friction dont les extrémités circonférentielles sont reçues en coulissement et en ancrage sur un organe support de couple, des moyens de commande étant associés à ce dernier pour solliciter l'organe de friction en contact de freinage avec une face correspondante d'un disque de frein, au moins une première des extrémités circonférentielles de l'organe de friction comportant au moins une surface arrondie susceptible de co-opérer en coulissement et en ancrage avec une surface arrondies correspondante définie sur l'organe support de couple, l'une des surfaces arrondies étant concave et l'autre surface arrondie étant convexe, le rayon de courbure de la surface convexe étant inférieur à celui de la surface concave, l'organe de friction étant reçu avec un jeu circonférentiel prédéterminé dans l'organe support de couple de sorte que l'organe de friction peut occuper une première et une seconde positions circonférentielles extrêmes correspondant à l'ancrage de l'organe de friction sur l'organe support de couple par sa première extrémité circonférentielle ou par la seconde extrémité circonférentielle respectivement, selon le sens de rotation du disque, des moyens élastiques étant prévus pour solliciter l'organe de friction en éloignement de la première position circonférentielle extrême et en contact permanent avec la surface arrondie définie sur l'organe support de couple.

Une telle disposition a pour but d'obliger l'organe de friction à se déplacer le long d'une surface en vis à vis définie sur l'organe support de couple à chaque fois qu'une mise en oeuvre du frein est effectuée, de façon à éviter la formation de dépôts et à décaper automatiquement les surfaces arrondies en contact de l'organe de friction et de l'organe support de couple.

Une telle solution donne entière satisfaction en utilisation normale du véhicule ainsi équipé. Cependant, lorsque la roue du véhicule associée à un frein de ce type est soumise à des accélérations verticales importantes dues par exemple à un revêtement routier en mauvais état, l'inertie de l'organe de friction peut devenir supérieure à la sollicitation exercée par les moyens élastiques, et l'organe de friction peut alors se déplacer dans les limites du jeu circonférentiel prédéterminé. Lorsque, dans ces conditions, le frein est actionné, l'organe de friction ne se trouve pas dans la position circonférentielle qui devrait être la sienne, et l'action de freinage a pour résultat de projeter violemment l'organe de friction sur l'organe support de couple. Il en résulte alors des claquement importants qui, outre qu'ils génèrent des bruits intenses, peuvent altérer le fonctionnement du frein et nuire à sa longévité.

La présente invention a donc pour objet de prévoir, dans un frein à disque du type rappelé ci-dessus, un ensemble d'un organe de friction et d'un ressort ne présentant pas ces inconvénients.

Dans ce but, selon la présente invention, le ressort est réalisé en fil métallique et comporte une partie d'action coopérant avec une ouverture pratiquée dans la partie arrondie convexe et une partie de réaction coopérant avec les bords de la partie arrondie concave.

Grâce à un tel ressort, la partie d'action exerce sur la plaque support de l'organe de friction une force possédant une composante tangentielle et une composante radiale. La composante radiale est avantageusement dirigée vers l'extérieur du disque. La composante tangentielle est elle aussi avantageusement dirigée dans le sens de rotation du disque correspondant à la marche avant du véhicule.

En choisissant convenablement la contrainte exercée par le ressort sur l'organe de friction, ce dernier sera toujours dans sa première position circonférentielle, quelles que soient les sollicitations auxquelles sera soumise la roue du véhicule associée au frein équipé d'un ensemble d'un organe de friction et d'un ressort selon la présente invention.

L'invention sera mieux comprise et d'autres buts, caractéristiques et avantages apparaîtront clairement à la lecture de la description qui suit d'un mode de réalisation donné à titre d'exemple en référence aux dessins annexés sur lesquels :
- La Figure 1 est une vue de face d'un ensemble d'un organe de friction et d'un ressort réalisé conformément à la présente invention ;
- La Figure 2 est une vue de côté de l'ensemble représenté sur la Figure 1 ;
- La Figure 3 est une vue de face de l'ensemble représenté sur la Figure 1 installé dans un organe de support de couple ;
- La Figure 4 est une vue en perspective du ressort équipant l'ensemble représenté sur la Figure 1 ;
- La Figure 5 est une vue en plan d'une variante du ressort de la Figure 4 ; et
- La Figure 6 est une vue à la plus grande échelle d'un détail de la Figure 3.

Sur les différentes Figures, les mêmes éléments portent les mêmes numéros de référence.

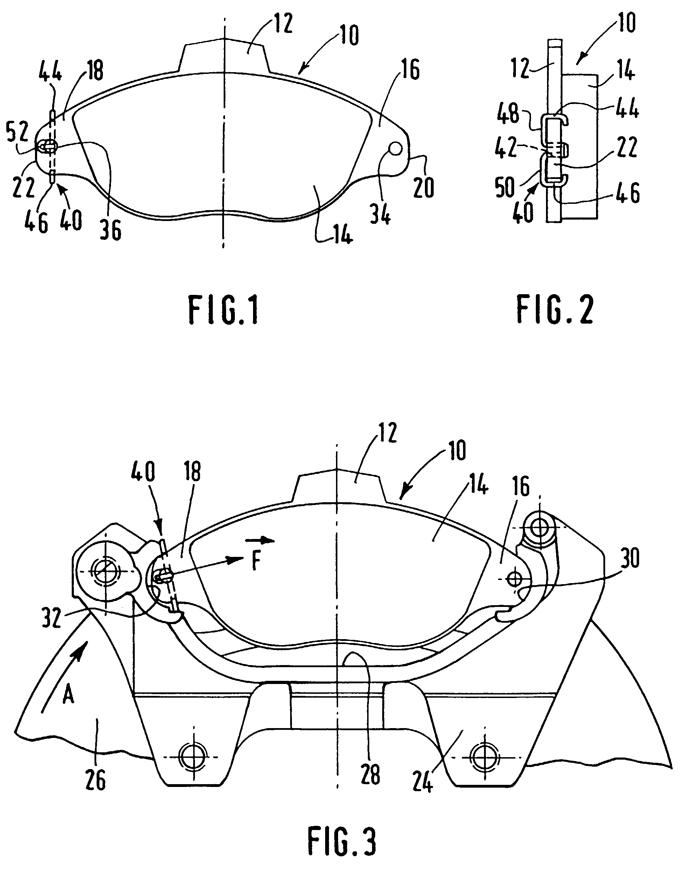

On a représenté sur la Figure 1 un ensemble formé d'un organe de friction désigné dans son ensemble par la référence 10, comportant une plaque support de garniture 12 à laquelle est associé par tout moyen approprié tel que, par exemple, par collage ou par rivetage, un bloc de matériau de friction 14. Les extrémités circonférentielles avant 16 et arrière 18 de l'organe de friction 10 comportent des surfaces arrondies 20 et 22 respectivement et sont constituées par des prolongements dépourvus de matériau de friction de la plaque support de garniture 12. Les surfaces arrondies 20 et 22 sont définies sur les bords de ces prolongements.

L'organe de friction 10 est destiné à équiper un frein à disque comprenant (Figure 3) un organe fixe de support de couple 24 prévu pour être associé à une partie fixe du véhicule. L'organe fixe de support de couple 24 présente une forme en U et chevauche un disque 26 prévu pour être associé à une partie tournant avec l'une des roues du véhicule.

L'organe fixe 24 définit de part et d'autre du disque 26 deux fenêtres, dont une seule 28 est représentée sur la Figure 3, recevant en ancrage et coulissement deux organes de friction tels que 10, disposés en vis à vis des faces de friction du disque 26.

L'organe fixe de support de couple 24 est formé, de part et d'autre de la fenêtre 28, avec des surfaces arrondies avant 30 et arrière 32, coopérant avec les surfaces arrondies en vis à vis 20 et 22 respectivement formées sur la plaque support 12 de l'organe de friction 10. Les extrémités avant 16 et arrière 18 correspondent respectivement aux extrémités par lesquelles l'organe de friction 10 prend ancrage sur l'organe fixe 24 lorsque le disque 26 tourne dans les sens correspondant à la marche avant du véhicule indiqué par la flèche A sur la Figure 3. Les surfaces arrondies 20 et 22 sont des surfaces convexes et les surfaces arrondies en vis à vis 30 et 32 sont des surfaces concaves dont le rayon de courbure est supérieur ou égal en tout point à celui des surfaces convexes 20 et 22, de telle façon que l'organe de friction 10 soit reçu avec un jeu circonférentiel prédéterminé B dans l'organe de support de couple 24.

Enfin, un ressort 40 est associé à l'organe de friction 10 de façon à solliciter ce dernier circonférentiellement dans l'organe de support de couple 24. De façon plus précise, au moins une extrémité circonférentielle de l'organe de friction 10 est formée avec une ouverture traversante. Dans l'exemple représenté, des ouvertures 34 et 36 sont formées dans les extrémités 16 et 18 respectivement, pour assurer la symétrie de l'organe de friction 10 en fabrication, entre l'organe de friction intérieur et l'organe de friction extérieur. Le ressort 40 est en fil métallique, il est associé à l'extrémité circonférentielle arrière 18 et comporte une partie d'action 42 traversant l'ouverture 36 et une partie de réaction coopérant avec les bords de la partie arrondie concave 32 de l'organe de support de couple 24.
La partie de réaction du ressort 40 est formée par deux branches 44 et 46, sensiblement parallèles entre elles et à la partie d'action 42, et réunies à celle-ci par deux bras 48 et 50 respectivement.

Dans l'exemple représenté aux Figures 1 à 4 et 6, la partie d'action 42 est elle même double et est formée de deux brins 42a et 42b.

En d'autres termes, le ressort 40 est obtenu à partir d'un segment de fil métallique plié en deux en son milieu. La partie de fil métallique au voisinage immédiat du pli constitue une partie de liaison 52 en forme de U, reliant une des extrémités des deux brins 42a et 42b formant la partie d'action 42, l'autre extrémité des brins 42a et 42b est prolongée sensiblement à angle droit par le bras 48, 50, respectivement, lui-même prolongé sensiblement à angle droit dans le même plan par la branche 44, 46 de la partie de réaction.

De façon avantageuse, pour assurer le maintien du ressort 40 sur l'organe de friction 10, on peut prévoir qu'au moins une des branches 44, 46 formant la partie de réaction soit prolongée sensiblement à angle droit dans le même plan par une partie terminale 54, 56 dirigée vers la partie de liaison 52 en forme de U. Les brins 42a et 42b, ainsi que les branches 44 et 46 ayant une longueur légèrement supérieure à l'épaisseur de la partie circonférentielle 18 de la plaque support de garniture 12 de l'organe de friction 10, les bras 48 et 50 en coopération avec les parties terminales 54 et 56 assurent le maintien circonférentiel du ressort 40 sur l'organe de friction 10, tandis que la partie d'action 42 dans l'ouverture 36 en assure le maintien radial.

Additionnellement, si on désire parfaire le maintien du ressort 40 sur l'organe de friction 10, on peut prévoir de courber sensiblement à angle droit la partie de liaison 52 en forme de U par rapport au plan contenant les parties d'action 42 et de réaction 44, 46 ainsi que les bras 48 et 50. La partie de liaison 52 participe ainsi également au maintien circonférentiel du ressort 40 sur l'organe de friction 10, en coopération avec les bras 48 et 50.

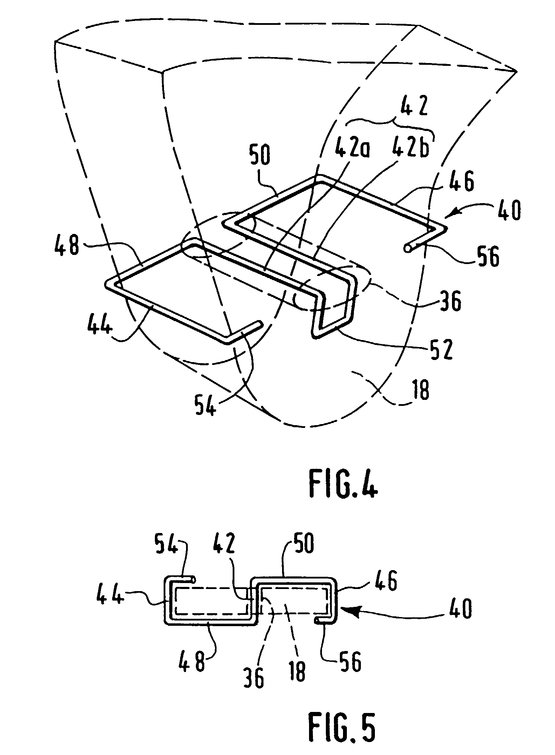

Selon un autre mode de réalisation du ressort 40 représenté à la Figure 5, le ressort 40 est obtenu à partir d'un segment de fil métallique dont la partie centrale, de longueur légèrement supérieure à l'épaisseur de la partie circonférentielle 18 de la plaque support de garniture 12 de l'organe de friction 10, constitue la partie d'action 42 du ressort 40, traversant l'ouverture 36 dans la partie d'action 42 est prolongée sensiblement à angle droit par un bras 48, 50, lui-même prolongé sensiblement à angle droit dans le même plan par la branche 44, 46 de la partie de réaction du ressort 40.

Egalement de façon avantageuse dans ce mode de réalisation, on peut prévoir de prolonger sensiblement à angle droit du moins une des branches 44, 46 par une partie terminale 54, 56 dirigée vers la partie d'action 42 pour assurer le maintien du ressort 40 sur l'organe de friction 10.

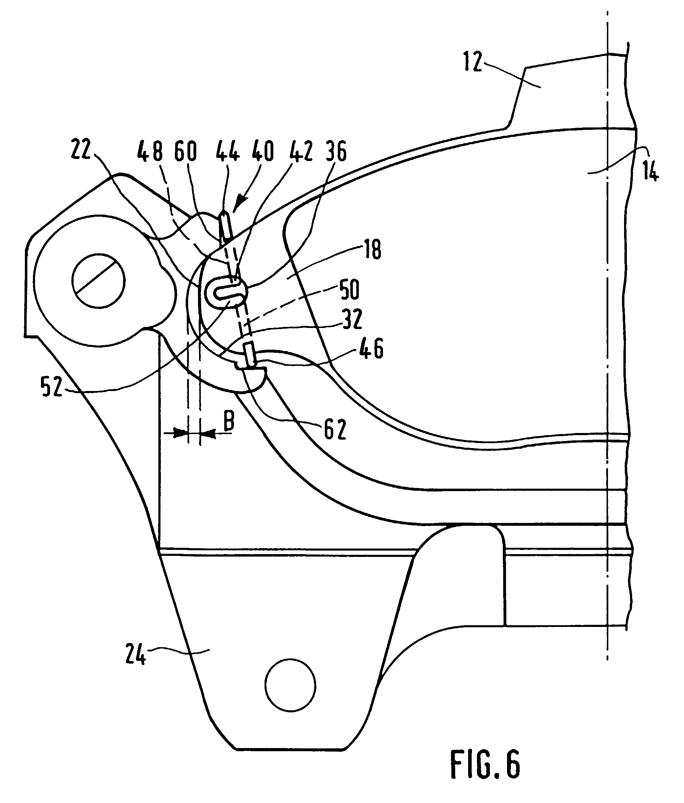

Ayant ainsi décrit l'organe de friction et le ressort qui l'accompagne, le fonctionnement de cet ensemble dans un frein à disque se comprendra aisément. L'organe de friction 10 équipé de son ressort 40 est installé, comme on l'a représenté sur les Figures 3 et 6, sur un organe de support de couple 24, qui, dans l'exemple représenté est fixe, par exemple fixé au porte fusée de la roue ainsi équipée. L'étrier comportant les moyens de commande du frein n'a pas été représenté dans un souci de clarté du dessin. On voit sur les Figures 3 et 6 l'organe de friction intérieur, c'est-à-dire situé du côté du disque 26 tourné vers le véhicule. Il va de soi que les explications qui suivent s'appliquent à l'organe de friction extérieur, c'est-à-dire situé du côté du disque 26 tourné vers l'extérieur du véhicule.

Lorsque l'ensemble organe de friction-ressort est installé sur l'organe support de couple 24 et est au repos, les différents éléments occupent les positions représentées aux Figures 3 et 6. En particulier, le ressort 40 est soumis à une précontrainte au repos, la partie de réaction constituée des branches 44 et 46 prenant appui sur les bords de la partie arrondie concave 32 formée sur l'organe de support de couple 24, et la partie d'action 42 exerçant une force sur la paroi de l'ouverture 36 pratiquée dans la partie arrondie convexe 18 de la plaque support 12. De façon plus précise, la partie arrondie concave 32 de l'organe support de couple 24 a par construction une étendue limitée et est raccordée au reste de la structure de l'organe support de couple 24 par des bords ou berges 60 et 62 (Figure 6) sur lesquelles prend appui la partie de réaction 44 et 46 du ressort 40, la distance entre les branches 44 et 46 de la partie de réaction étant supérieur à l'ouverture de la partie concave 32, c'est-à-dire à la corde (au sens géométrique du terme) joignant les extrémités de la partie arrondie concave.

Le ressort 40 étant donc précontraint entre les bords ou berges 60 et 62 de la partie arrondie concave 32 et la paroi de l'ouverture 36 dans la partie arrondie convexe 18, les branches 48 et 50 adoptent une position dans laquelle elles forment, dans le plan de la Figure 6 par exemple, un angle obtu dont le sommet est situé au niveau de la partie d'action 42.

Cette dernière va donc exercer sur l'organe de friction 10, par l'intermédiaire de la paroi de l'ouverture 36, une force F dirigée selon la bissectrice de cet angle. Cette force F possède une composante tangentielle et une composante radiale perpendiculaires l'une à l'autre. La composante radiale est dirigée vers l'extérieur du disque 26, par rapport à l'axe de ce dernier, et sollicite la surface arrondie convexe 22 en contact avec la surface arrondie concave 32 en un point le plus éloigné de l'axe du disque 26.

La composante tangentielle est dirigée dans le sens de la rotation du disque correspondant à la marche avant du véhicule, indiqué par la flèche A sur la Figure 3, et sollicite la surface arrondie convexe 22 en éloignement, en direction circonférentielle, de la surface arrondie concave 32, pour définir le jeu circonférentiel B. La surface arrondie convexe 20, à l'avant de l'organe de friction 10, est donc elle aussi sollicitée en contact avec le fond de la surface arrondie concave 30.

Lorsque le véhicule circule en marche avant et que le conducteur actionne la pédale de frein, du fluide hydraulique sous pression est communiqué à un moteur de frein (non représenté), qui applique sur la plaque support 12 une force qui applique le bloc de matériau de friction 14 sur une face du disque 26. L'autre organe de friction sera appliqué sur l'autre face du disque par réaction ou par un autre moteur de frein.

La venue en engagement du bloc de matériau de friction 14 avec la face du disque 26 a pour conséquence, outre de ralentir la rotation de ce dernier, de transmettre à l'organe de friction 10 une force de freinage dirigée vers la droite en considérant les Figures 3 et 6 lorsque le disque 26 tourne dans le sens correspondant à la marche avant du véhicule désignée par la flèche A sur la Figure 3. Grâce à la conception particulière du ressort et de l'organe de friction selon l'invention dans l'organe support de couple, cette force de freinage s'exerce parallèlement et dans le même sens que la force F précédemment décrite exercée par repos par le ressort sur l'organe de friction. Il s'ensuit donc que, lors d'une action de freinage, l'organe de friction 10 est sollicité dans la position circonférentielle qu'il occupait déjà avant cette action de freinage.

On comprend donc que l'ensemble organe de friction-ressort selon l'invention a une position de repos correspondant exactement à sa position de fonctionnement et qu'ainsi, l'organe de friction ne sera pas amené à quitter cette position, même en cas de sollicitations extrêmes telles que les accélérations verticales importantes dues à un revêtement routier en mauvais état ou même inexistant.

Par contre, lorsque le véhicule circule en marche arrière, sa vitesse est par hypothèse suffisamment faible pour que les sollicitations extrêmes rappelées ci-dessus n'existent pas. L'ensemble organe de friction-ressort occupe donc la position de repos représentée aux Figures 3 et 6. La venue en engagement du bloc de matériau de friction 14 avec la face du disque 26 a pour conséquence de transmettre à l'organe de friction 10 une force de freinage dirigée vers la gauche en considérant les Figures 3 et 6.

Cette force de freinage s'exerce donc à l'encontre de la composante circonférentielle de la force exercée par le ressort 40 et tend à combler le jeu B existant entre l'extrémité circonférentielle de la surface 22 et le fond de la surface 32. Au cours du mouvement vers la gauche qui en résulte, en considérant les Figures 3 et 6, la composante radiale de la force exercée par le ressort 40 maintient la surface 22 en contact permanent avec la partie supérieure de la surface 32. Simultanément, la surface 20 définie sur le prolongement avant 16 de l'organe de friction 10 est sollicitée en éloignement du fond de la surface 30 définie sur l'organe support de couple 24.

De la sorte, chaque mise en oeuvre du frein alors que le véhicule circule en marche arrière impose un déplacement circonférentiel de l'organe de friction 10 qui a pour effet, par suite du contact permanent existant entre les surfaces 32 et 22, de nettoyer ou de décaper ces surfaces. Tout dépôt de boue ou tout début de corrosion ayant par exemple pour origine un arrêt prolongé du véhicule se trouve donc rapidement effacé par le balayage des surfaces 32 et 22 et, parallèlement des surfaces 20 et 30, à chaque mise en oeuvre du frein lors d'une marche arrière du véhicule.

Bien entendu, l'invention n'est pas limitée aux modes de réalisation qui ont été décrits à titre d'exemple, mais est susceptibles de recevoir de nombreuses modification qui apparaîtront à l'homme du métier.

L'invention peut notamment être utilisée dans tout autre type de frein, et en particulier dans un frein fixe dans lequel les moyens de commande sont associés à l'organe support de couple et agissent directement sur chacun des organes de friction, ainsi que dans un frein du type décrit mais dans lequel les organes de friction prennent ancrage sur l'étrier. De même les surfaces concaves et convexes en vis-à-vis des organes de friction et de l'organe support de couple peuvent être inversées, c'est-à-dire que les surfaces convexes peuvent être formées sur l'organe support de couple, les surfaces concaves étant alors formées sur les organes de friction. On peut également concevoir un frein à disque dans lequel une des extrémités des organes de friction définirait une surface convexe coopérant avec une surface concave formée sur l'organe support de couple, tandis que l'autre extrémité des organes de friction définirait une surface concave coopérant avec une surface convexe définie sur l'organe support de couple. En outre, les rayons de courbure des surfaces concaves et convexes formées sur les organes de friction et sur l'organe support de couple peuvent être variables et différents selon qu'il s'agit de l'extrémité avant ou de l'extrémité arrière des organes de friction.

## Revendications

1. Frein à disque pour véhicule comprenant au moins un organe de friction (10) comportant une plaque support (12) dont les extrémités circonférentielles (16, 18) sont reçues en coulissement et en ancrage sur un organe support de couple (24), des moyens de commande étant associés à ce dernier pour solliciter l'organe de friction (10) en contact de freinage avec une face correspondante d'un disque de frein (26), au moins une première (18) des extrémités circonférentielles (16, 18) de l'organe de friction (10) comportant au moins une surface arrondie (22) susceptible de coopérer en coulissement et en ancrage avec une surface arrondie (32) correspondante définie sur l'organe support de couple (24), l'une desdites surfaces arrondies (32) étant concave et l'autre surface arrondie (22) étant convexe, le rayon de courbure de la surface convexe (22) étant inférieur à celui de la surface concave (32), l'organe de friction étant reçu avec un jeu circonférentiel prédéterminé (B) dans l'organe support de couple (24) de sorte que l'organe de friction (10) peut occuper une première et une seconde positions circonférentielles extrêmes correspondant à l'ancrage dudit organe de friction (10) sur l'organe support de couple (24) par sa première extrémité circonférentielle (18) ou par la seconde extrémité circonférentielle (16) respectivement, selon le sens de rotation du disque, un ressort (40) étant prévu pour solliciter ledit organe de friction (10) dans une première position circonférentielle extrême et en contact permanent avec la surface arrondie (32) définie sur l'organe support de couple (24), le ressort (40) comportant une partie d'action (42) coopérant avec la partie arrondie convexe (18) et une partie de réaction (44, 46) coopérant avec la partie arrondie concave (32), caractérisé en ce que la partie de réaction (44, 46) coopère avec les bords (60, 62) de la partie arrondie concave (32), et en ce que la partie d'action du ressort coopère avec une ouverture (36) pratiquée dans la partie arrondie convexe (18) et exerce sur la plaque support (12) de l'organe de friction (10) une force possédant une composante tangentielle et une composante radiale perpendiculaire à la composante tangentielle et dirigée vers l'extérieur du disque (26), la composante tangentielle de la force exercée par le ressort (40) étant dirigée dans le sens de la rotation du disque (26) correspondant à la marche avant (A) du véhicule.

2. Frein à disque selon la revendication 1, caractérisé en ce que le ressort (40) est en fil métallique, la partie d'action (42) du ressort (40) étant constituée d'une branche centrale (42), traversant l'ouverture (36) pratiquée dans la partie arrondie convexe (18), et la partie de réaction (44, 46) étant constituée de deux branches (44, 46) sensiblement parallèles et symétriques par rapport à la branche centrale (42), et entourant la partie arrondie convexe (18).

3. Frein à disque selon la revendication 2, caractérisé en ce que chaque extrémité de la branche centrale (42) constituant la partie d'action (42) du ressort (40) est prolongée sensiblement à angle droit par un bras (48, 50) lui-même prolongé sensiblement à angle droit par une branche (44, 46) formant une partie de réaction (44, 46), elle même étant prolongée sensiblement à angle droit par une partie terminale (54, 56) dirigée vers la branche centrale (42).

4. Frein à disque selon la revendication 1, caractérisé en ce que le ressort (40) est formé d'un segment continu de fil métallique, replié sur lui-même en son milieu pour former la partie d'action (42) en deux brins parallèles (42a, 42b) pénétrant dans l'ouverture (36) pratiquée dans la partie arrondie convexe (18), les deux brins (42a, 42b) étant réunis à l'une de leurs extrémités par une partie de liaison en forme de U (52), l'autre extrémité de chaque brin (42a, 42b) étant prolongée sensiblement à angle droit par un bras (48, 50) lui-même prolongé sensiblement à angle droit par une branche (44, 46) formant une partie de réaction (44, 46).

5. Frein à disque selon la revendication 4, caractérisé en ce qu'au moins une branche (44, 46) formant partie de réaction (44, 46) est prolongée sensiblement à angle droit par une partie terminale (54, 56) dirigée vers la partie de liaison en forme de U (52).

6. Frein à disque selon la revendication 5, caractérisé en ce que la partie d'action (42) et la partie de réaction (44, 46) sont sensiblement dans un même plan, la partie de liaison de forme de U (52) s'étendant sensiblement perpendiculairement à ce plan.

7. Ensemble d'un organe de friction (10) et d'un ressort (40) pour frein à disque de véhicule, l'organe de friction (10) comportant une plaque support (12) dont les extrémités circonférentielles (16, 18) sont reçues en coulissement et en ancrage sur un organe support de couple (24), des moyens de commande étant associés à ce dernier pour solliciter l'organe de friction (10) en contact de freinage avec une face correspondante d'un disque de frein (26), au moins une première (18) des extrémités circonférentielles (16, 18) de l'organe de friction (10) comportant au moins une surface arrondie (22) susceptible de coopérer en coulissement et en ancrage avec une surface arrondie (32) correspondante définie sur l'organe support de couple (24), l'une desdites surfaces arrondies (32) étant concave et l'autre surface arrondie (22) étant convexe, le rayon de courbure de la surface convexe (22) étant inférieur à celui de la surface concave (32), l'organe de friction étant reçu avec un jeu circonférentiel prédéterminé (B) dans l'organe support de couple (24) de sorte que l'organe de friction (10) peut occuper une première et une seconde positions circonférentielles extrêmes correspondant à l'ancrage dudit organe de friction (10) sur l'organe support de couple (24) par sa première extrémité circonférentielle (18) ou par la seconde extrémité circonférentielle (16) respectivement, selon le sens de rotation du disque, le ressort (40) étant prévu pour solliciter ledit organe de friction (10) dans une première position circonférentielle extrême et en contact permanent avec la surface arrondie (32) définie sur l'organe support de couple (24), le ressort (40) comportant une partie d'action (42) coopérant avec la partie arrondie convexe (18) et une partie de réaction (44, 46) coopérant avec la partie arrondie concave (32), caractérisé en ce que la partie de réaction (44, 46) coopère avec les bords (60, 62) de la partie arrondie concave (32), et en ce que la partie d'action du ressort coopère avec une ouverture (36) pratiquée dans la partie arrondie convexe (18) et exerce sur la plaque support (12) de l'organe de friction (10) une force possédant une composante tangentielle et une composante radiale perpendiculaire à la composante tangentielle et dirigée vers l'extérieur du disque (26), la composante tangentielle de la force exercée par le ressort (40) étant dirigée dans le sens de la rotation du disque (26) correspondant à la marche avant (A) du véhicule.

## Patentansprüche

1. Scheibenbremse für ein Fahrzeug, mit wenigstens einem Reiborgan (10), welches eine Trägerplatte (12) enthält, deren Umfangsenden (16, 18) verschiebbar und verankert an einem Momentenabstützorgan (24) aufgenommen sind, wobei diesem Steuermittel zugeordnet sind, um das Reiborgan (10) in eine Bremsberührung mit einer entsprechenden Seite einer Bremsscheibe (26) zu beaufschlagen, wobei wenigstens ein erstes (18) der Umfangsenden (16, 18) des Reiborgans (10) wenigstens eine abgerundete Fläche (22) aufweist, die in der Lage ist, verschiebbar und verankert mit einer entsprechenden abgerundeten Fläche (32) zusammenzuwirken, die an dem Momentenabstützorgan (24) gebildet ist, wobei eine der abgerundeten Flächen (32) konkav ist und die andere abgerundete Fläche (22) konvex ist, wobei der Krümmungsradius der konvexen Fläche (22) kleiner als derjenige der konkaven Fläche (32) ist, wobei das Reiborgan mit einem vorbestimmten Umfangsspiel (B) in dem Momentenabstützorgan (24) aufgenommen ist, so daß das Reiborgan (10) eine erste und eine zweite Umfangsendstellung einnehmen kann, welche der Verankerung des Reiborgans (10) an den Momentenabstützorgan (24) mittels seines ersten Umfangsendes (18) bzw. seines zweiten Umfangsendes (16), abhängig von der Drehrichtung der Scheibe, entspricht, wobei eine Feder (40) vorgesehen ist, um das Reiborgan (10) in eine erste Umfangsendstellung und in eine permanente Berührung mit der abgerundeten Fläche (32) zu beaufschlagen, die an dem Momentenabstützorgan (24) gebildet ist, wobei die Feder (40) einen Aktionsabschnitt (42) aufweist, der mit dem konvexen abgerundeten Abschnitt (18) zusammenwirkt, und einen Reaktionsabschnitt (44, 46), der mit dem konkaven abgerundeten Abschnitt (32) zusammenwirkt, dadurch gekennzeichnet, daß der Reaktionsabschnitt (44, 46) mit den Rändern (60, 62) des konkaven abgerundeten Abschnittes (32) zusammenwirkt und daß der Aktionsabschnitt der Feder mit einer Öffnung (36) zusammenwirkt, die in dem konvexen abgerundeten Abschnitt (18) ausgebildet ist, und auf die Trägerplatte (12) des Reiborgans (10) eine Kraft ausübt, die eine tangentiale Komponente und eine radiale Komponente aufweist, die senkrecht zur tangentialen Komponente ist und bezüglich der Scheibe (26) nach außen gerichtet ist, wobei die tangentiale Komponente der von der Feder (40) ausgeübten Kraft in der Drehrichtung der Scheibe (26) ausgerichtet ist, welche der Vorwärtsfahrt (A) des Fahrzeugs entspricht.

2. Scheibenbremse nach Anspruch 1, dadurch gekennzeichnet, daß die Feder (40) aus Metalldraht besteht, wobei der Aktionsabschnitt (42) der Feder (40) durch einen Mittelschenkel (42) gebildet ist, der die in dem konvexen abgerundeten Abschnitt (18) ausgebildete Öffnung (36) durchquert, und wobei der Reaktionsabschnitt (44, 46) durch zwei Schenkel (44, 46) gebildet ist, die im wesentlichen parallel und symmetrisch bzgl. des Mittelschenkels (42) sind und den konvexen abgerundeten Abschnitt (18) umgeben.

3. Scheibenbremse nach Anspruch 2, dadurch gekennzeichnet, daß jedes Ende des Mittelschenkels (42), der den Aktionsabschnitt (42) der Feder (40) bildet, im wesentlichen im rechten Winkel durch einen Arm (48, 50) verlängert ist, der wiederum im wesentlichen im rechten Winkel durch einen Schenkel (44, 46) verlängert ist, der einen Reaktionsabschnitt (44, 46) bildet, wobei dieser wiederum im wesentlichen im rechten Winkel durch einen Endabschnitt (54, 56) verlängert ist, der zum Mittelschenkel (42) gerichtet ist.

4. Scheibenbremse nach Anspruch 1, dadurch gekennzeichnet, daß die Feder (40) durch ein durchgehendes Segment aus Metalldraht gebildet ist, das in seiner Mitte auf sich selbst zurückgebogen ist, um den Aktionsabschnitt (42) aus zwei parallelen Stegen (42a, 42b) zu bilden, welche in die Öffnung (36) eindringen, die in dem konvexen abgerundeten Abschnitt (18) gebildet ist, wobei die beiden Stege (42a, 42b) miteinander an einem ihrer Enden mittels eines U-förmigen Verbindungsabschnittes (52) verbunden sind, wobei das andere Ende jedes Steges (42a, 42b) im wesentlichen im rechten Winkel durch einen Arm (48, 50) verlängert ist, der wiederum im wesentlichen im rechten Winkel durch einen Schenkel (44, 46) verlängert ist, der einen Reaktionsabschnitt (44, 46) bildet.

5. Scheibenbremse nach Anspruch 4, dadurch gekennzeichnet, daß wenigstens ein Schenkel (44, 46), der einen Reaktionsabschnitt (44, 46) bildet, im wesentlichen im rechten Winkel durch einen Endabschnitt (54, 56) verlängert ist, der zum U-förmigen Verbindungsabschnitt (52) gerichtet ist.

6. Scheibenbremse nach Anspruch 5, dadurch gekennzeichnet, daß der Aktionsabschnitt (42) und der Reaktionsabschnitt (44, 46) sich im wesentlichen in ein und derselben Ebene befinden, wobei der U-förmige Verbindungsabschnitt (52) sich im wesentlichen senkrecht zu dieser Ebene erstreckt.

7. Baugruppe aus einem Reiborgan (10) und einer Feder (40) für eine Fahrzeug-Scheibenbremse, wobei das Reiborgan (10) eine Trägerplatte (12) enthält, deren Umfangsenden (16, 18) verschiebbar und verankert an einem Momentenabstützorgan (24) aufgenommen sind, wobei diesem Steuermittel zugeordnet sind, um das Reiborgan (10) in eine Bremsberührung mit einer entsprechenden Seite einer Bremsscheibe (26) zu beaufschlagen, wobei wenigstens ein erstes (18) der Umfangsenden (16, 18) des Reiborgans (10) wenigstens eine abgerundete Fläche (22) aufweist, die in der Lage ist, verschiebbar und verankert mit einer entsprechenden abgerundeten Fläche (32) zusammenzuwirken, die an dem Momentenabstützorgan (24) gebildet ist, wobei eine der abgerundeten Flächen (32) konkav ist und die andere abgerundete Fläche (22) konvex ist, wobei der Krümmungsradius der konvexen Fläche (22) kleiner als derjenige der konkaven Fläche (32) ist, wobei das Reiborgan mit einem vorbestimmten Umfangsspiel (B) in dem Momentenabstützorgan (24) aufgenommen ist, so daß das Reiborgan (10) eine erste und eine zweite Umfangsendstellung einnehmen kann, welche der Verankerung des Reiborgans (10) an den Momentenabstützorgan (24) mittels seines ersten Umfangsendes (18) bzw. seineszweiten Umfangsendes (16), abhängig von der Drehrichtung der Scheibe, entspricht, wobei die Feder (40) vorgesehen ist, um das Reiborgan (10) in eine erste Umfangsendstellung und in eine permanente Berührung mit der abgerundeten Fläche (32) zu beaufschlagen, die an dem Momentenabstützorgan (24) gebildet ist, wobei die Feder (40) einen Aktionsabschnitt (42) aufweist, der mit dem konvexen abgerundeten Abschnitt (18) zusammenwirkt, und einen Reaktionsabschnitt (44, 46), der mit dem konkaven abgerundeten Abschnitt (32) zusammenwirkt, dadurch gekennzeichnet, daß der Reaktionsabschnitt (44, 46) mit den Rändern (60, 62) des konkaven abgerundeten Abschnittes (32) zusammenwirkt und daß der Aktionsabschnitt der Feder mit einer Öffnung (36) zusammenwirkt, die in dem konvexen abgerundeten Abschnitt (18) ausgebildet ist, und auf die Trägerplatte (12) des Reiborgans (10) eine Kraft ausübt, die eine tangentiale Komponente und eine radiale Komponente aufweist, die senkrecht zur tangentialen Komponente ist und bezüglich der Scheibe (26) nach außen gerichtet ist, wobei die tangentiale Komponente der von der Feder (40) ausgeübten Kraft in der Drehrichtung der Scheibe (26) ausgerichtet ist, welche der Vorwärtsfahrt (A) des Fahrzeugs entspricht.

## Claims

1. Disk-brake for a vehicle comprising at least one friction member (10) comprising a support plate (12) whose circumferential ends (16, 18) are received with sliding and anchoring on a torque-withstanding member (24), control means being associated with the latter in order to stress the friction member (10) into braking contact with a corresponding face of a brake disk (26), at least a first (18) of the circumferential ends (16, 18) of the friction member (10) comprising at least one rounded surface (22) capable of interacting with sliding and anchoring with a corresponding rounded surface (32) defined on the torque-withstanding member (24), one of said rounded surfaces (32) being concave and the other rounded surface (22) being convex, the radius of curvature of the convex surface (22) being less than that of the concave surface (32), the friction member being received with a predetermined circumferential clearance (B) in the torque-withstanding member (24) so that the friction member (10) may occupy a first and a second extreme circumferential position corresponding to said friction member (10) being anchored onto the torque-withstanding member (24) by its first circumferential end (18) or by the second circumferential end (16) respectively, according to the direction of rotation of the disk, a spring (40) being provided in order to stress said friction member (10) into a first extreme circumferential position and into permanent contact with the rounded surface (32) defined on the torque-withstanding member (24), the spring (40) comprising an action part (42) interacting with the convex rounded part (18) and a reaction part (44, 46) interacting with the concave rounded part (32), characterized in that the reaction part (44, 46) interacts with the flanks (60, 62) of the concave rounded part (32) and in that the action part of the spring interacts with an opening (36) made in the convex rounded part (18) and exerts, on the support plate (12) of the friction member (10), a force having a tangential component and a radial component perpendicular to the tangential component and directed towards the outside of the disk (26), the tangential component of the force exerted by the spring (40) being directed in the direction of rotation of the disk (26) corresponding to the forward travel (A) of the vehicle.

2. Disk brake according to Claim 1, characterized in that the spring (40) is made from metal wire, the action part (42) of the spring (40) being made up of a central branch (42), passing through the opening (36) made in the convex rounded part (18), and the reaction part (44, 46) being made up of two branches (44, 46) which are substantially parallel and symmetrical with respect to the central branch (42), and surrounding the convex rounded part (18).

3. Disk brake according to Claim 2, characterized in that each end of the central branch (42) making up the action part (42) of the spring (40) is extended substantially at right angles by an arm (48, 50) itself extended substantially at right angles by a branch (44, 46) forming a reaction part (44, 46), itself being extended substantially at right angles by a terminal part (54, 56) directed towards the central branch (42).

4. Disk brake according to Claim 1, characterized in that the spring (40) is formed from a continuous segment of metal wire, bent back on itself at its middle in order to form the action part (42) of two parallel strand-parts (42a, 42b) penetrating into the opening (36) made in the convex rounded part (18), the two strand-parts (42a, 42b) being connected at one of their ends by a U-shaped connection part (52), the other end of each strand-part (42a, 42b) being extended substantially at right angles by an arm (48, 50) itself extended substantially at right angles by a branch (44, 46) forming a reaction part (44, 46).

5. Disk brake according to Claim 4, characterized in that at least one branch (44, 46) forming a reaction part (44, 46) is extended substantially at right angles by a terminal part (54, 56) directed towards the U-shaped connection part (52).

6. Disk brake according to Claim 5, characterized in that the action part (42) and the reaction part (44, 46) are substantially in the same plane, the U-shaped connection part (52) extending substantially perpendicularly to this plane.

7. Assembly of a friction member (10) and of a spring (40) for a vehicle disc brake, the friction member member 10) comprising a support plate (12) whose circumferential ends (16, 18) are received with sliding and anchoring on a torque-withstanding member (24), control means being associated with the latter in order to stress the friction member (10) into braking contact with a corresponding face of a brake disk (26), at least a first (18) of the circumferential ends (16, 18) of the friction member (10) comprising at least one rounded surface (22) capable of interacting with sliding and anchoring with a corresponding rounded surface (32) defined on the torque-withstanding member (24), one of said rounded surfaces (32) being concave and the other rounded surface (22) being convex, the radius of curvature of the convex surface (22) being less than that of the concave surface (32), the friction member being received with a predetermined circumferential clearance (B) in the torque-withstanding member (24) so that the friction member (10) may occupy a first and a second extreme circumferential position corresponding to said friction member (10) being anchored onto the torque-withstanding member (24) by its first circumferential end (18) or by the second circumferential end (16) respectively, according to the direction of rotation of the disk, a spring (40) being provided in order to stress said friction member (10) into a first extreme circumferential position and into permanent contact with the rounded surface (32) defined on the torque-withstanding member (24), the spring (40) comprising an action part (42) interacting with the convex rounded part (18) and a reaction part (44, 46) interacting with the concave rounded part (32), characterized in that the reaction part (44, 46) interacts with the flanks (60, 62) of the concave rounded part (32) and in that the action part of the spring interacts with an opening (36) made in the convex rounded part (18) and exerts, on the support plate (12) of the friction member (10), a force having a tangential component and a radial component perpendicular to the tangential component and directed towards the outside of the disk (26), the tangential component of the force exerted by the spring (40) being directed in the direction of rotation of the disk (26) corresponding to the forward travel (A) of the vehicle.
